# EUROPÄISCHE PATENTSCHRIFT

(11) **EP 3 211 968 B1**
(45) Veröffentlichungstag und Bekanntmachung des Hinweises auf die Patenterteilung: **30.12.2020**
(21) Anmeldenummer: 16450029.0
(22) Anmeldetag: 02.11.2016
(51) Int. Cl.: H05B 45/357, F21V 25/10, F21V 25/04, F21K 9/27, A63H 33/16, B31D 5/00

(54) **SCHALTUNGSANORDNUNG ZUM BETRIEB VON MINDESTENS EINER LED-LEUCHTE**
CIRCUIT ASSEMBLY FOR THE OPERATION OF AT LEAST ONE LED LAMP
SYSTÈME DE COMMUTATION DESTINÉ AU FONCTIONNEMENT D'AU MOINS UNE LAMPE À DEL

(30) Priorität: 25.02.2016 AT 992016
(43) Veröffentlichungstag der Anmeldung: 30.08.2017
(73) Patentinhaber: METZE, Michael, 3032 Eichgraben (AT)
(72) Erfinder: METZE, Michael, 3032 Eichgraben (AT)
(74) Vertreter: Beer & Partner Patentanwälte KG

(56) Entgegenhaltungen:
- WO-A1-2011/014111
- WO-A1-2015/014584
- WO-A1-2015/014680
- AU-A4- 2009 101 044
- DE-A1- 19 900 889
- DE-A1-102014 204 875
- DE-U1-202010 010 536

## Beschreibung

Die gegenständliche Erfindung betrifft eine Schaltungsanordnung zum Betrieb von mindestens einer LED-Leuchte mit Leitungen zum Anschluss der LED-Leuchte an ein elektrisches Versorgungsnetz.

Es ist seit vielen Jahrzehnten bekannt, für Beleuchtungszwecke Leuchtstoffröhren zu verwenden. Es sind dies mit einem Leuchtgas gefüllte Röhren, zu deren Betrieb elektrische Vorschaltgeräte (KVG) bzw. elektronische Vorschaltgeräte (EVG) benötigt werden. Seit einigen Jahren ist es weiters bekannt, für Beleuchtungszwecke LED-Leuchten zu verwenden.

LED-Leuchten sind gegenüber Leuchtstoffröhren deshalb vorteilhaft, da für deren Inbetriebnahme keine Vorschaltgeräte erforderlich sind und da sie einen wesentlich geringeren Strombedarf bedingen. Somit sind LED-Leuchten sowohl in der Erzeugung und in der Montage als auch im Betrieb wesentlich kostengünstiger als Leuchtstoffröhren.

Leuchtstoffröhren sind in der Regel an ihren beiden stirnseitigen Enden mit Kontaktstiften ausgebildet, welche in Kontaktbuchsen von Befestigungssockeln, welche sich in einer Speise- und Steuerschaltung befinden, einsetzbar sind. Da LED-Leuchten in gleicher Weise vielfach mit Kontaktstiften ausgebildet sind, ist es möglich, in eine Armatur für eine Leuchtstoffröhre an deren Stelle eine LED-Leuchte einzusetzen bzw. in eine Armatur für eine LED-Leuchte eine Leuchtstoffröhre einzusetzen. Sofern eine Leuchtstoffröhre in eine Armatur für eine LED-Leuchte eingesetzt wird, besteht jedoch die Gefahr einer Implosion bzw. einer Explosion der Leuchtstoffröhre mit der Gefahr von Verletzungen und einem Übertritt der in der Leuchtstoffröhre befindlichen umweltschädlichen Leuchtgase in die Atmosphäre.

Der Grund hierfür besteht darin, dass sich in Leuchtstoffröhren zur Zündung der elektrischen Entladung Heizwendeln befinden, welche einen sehr niedrigen Ohmschen Widerstand aufweisen. Durch die Vorschaltgeräte, welche den Armaturen für Leuchtstoffröhren zugeordnet sind, wird der den in Leuchtstoffröhren befindlichen Heizwendeln zugeführte Strom in der für deren Betrieb erforderlichen Weise gesteuert. Sofern jedoch keine Vorschaltgeräte vorgesehen sind, da solche bei LED-Leuchten nicht erforderlich sind, steigt bei einer Speisung einer Leuchtstoffröhre der die Heizwendel durchfließende Strom in kurzer Zeit so stark an, dass hierdurch die Leuchtstoffröhre explodieren kann.

Die DE 102014204875 A1, die WO 2011/014111 A1, die DE 202010010536 U1 und die AU 2009101044 A4 offenbaren Schaltungsanordnungen für LED-Leuchten, in welchen sich Schutzschaltungen gegen Überströme befinden. Sofern in diese Schaltungsanordnungen irrtümlich Leuchtstoffröhren eingesetzt werden, werden derartige Überströme durch die Schutzschaltungen verhindert. Allerdings sind diese Schutzschaltungen in ihrer Wirkung so träge, dass Schädigungen, insbesondere das Auslösen von nachgeordneten Sicherungen, verursacht werden können. Sofern diese Schutzschaltungen Schmelzsicherungen enthalten, sind sie zudem auch deshalb nachteilig, da in der Folge neue Sicherungen eingesetzt werden müssen.

Die DE 19900889 A1 offenbart eine Schaltungsanordnung für Leuchtstofflampen, die mit induktiven Vorschaltgeräten ausgestattet ist, welche auf Leuchtstofflampen im elektronischen Betrieb und mit einer verbesserten Effizienz umgerüstet werden können. Dies wird dadurch erzielt, dass zusätzliche Adapter eingesetzt und die Kontakte der Starterfassung (10) über einen PTC-Widerstandüberbrückt werden.

Die WO 2015/014680 A1 und die WO 2015/014584 A1 offenbaren LED-Leuchten, in die PTC-Widerstände eingebaut sind, um einen sicheren Betrieb zu ermöglichen, auch wenn sie mit einem Vorschaltgerät in der Schaltungsanordnung verbunden sind.

Der gegenständlichen Erfindung liegt die Aufgabe zugrunde, eine Schaltungsanordnung für mindestens eine Armatur zur Aufnahme einer LED-Leuchte zu schaffen, durch welche der Betrieb einer LED-Leuchte gewährleistet ist und durch welche jedoch dann, wenn in die Armatur eine Leuchtstoffröhre eingesetzt wird, die Stromzufuhr zur Speisung der Leuchtstoffröhre dahingehend gesteuert wird, dass dieser begrenzt wird, um hierdurch eine Explosion der Leuchtstoffröhre zu verhindern.

Dies wird erfindungsgemäß mit einer Schaltungsanordnung mit den Merkmalen des Anspruchs 1 erzielt.

Vorzugsweise weist die Schaltungsanordnung einen Träger auf, welcher mit ersten Klemmen für den Anschluss an das elektrische Versorgungsnetz und mit zweiten Klemmen für den Anschluss von mindestens einer LED-Leuchte ausgebildet ist, wobei die ersten und die zweiten Klemmen mittels elektrischer Leitungen miteinander verbunden sind und sich in mindestens einer dieser Leitungen der PTC-Widerstand, befindet.

Insbesondere sind in der Schaltungsanordnung vier zweite Klemmen vorgesehen, wobei ein Phasenleiter und der Neutralleiter über Leitungen mit zwei zweiten Klemmen verbunden sind und die zwei weiteren zweiten Klemmen miteinander mittels einer Leitung, in welcher sich der PTC-Widerstand befindet, verbunden sind.

Gemäß einer weiteren Ausführungsform ist die Schaltungsanordnung mit zwei Gruppen von zweiten Klemmen ausgebildet, an welche Speiseleitungen für zwei LED-Leuchten anklemmbar sind, wobei in den vom Versorgungsnetz her führenden Leitungen in jeder der beiden Gruppen mindestens ein strombegrenzender Bauteil, nämlich jeweils ein PTC-Widerstand, vorgesehen ist.

Eine erfindungsgemäße Schaltungsanordnung ist nachstehend anhand von in der Zeichnung dargestellten Ausführungsbeispielen näher erläutert. Es zeigen:
- FIG.1: eine Schaltungsanordnung für den Betrieb einer LED-Leuchte mit mindestens einem strombegrenzenden elektrischen Bauteil,
- FIG.2: eine Schaltungsanordnung für den Betrieb einer LED-Leuchte mit mindestens einem strombegrenzenden elektrischen Bauteil,
- FIG.3: eine Schaltungsanordnung für den Betrieb von zwei LED-Leuchten mit strombegrenzenden elektrischen Bauteilen und
- FIG.4: ein Diagramm betreffend die Wirkungsweise eines PTC-Widerstandes.

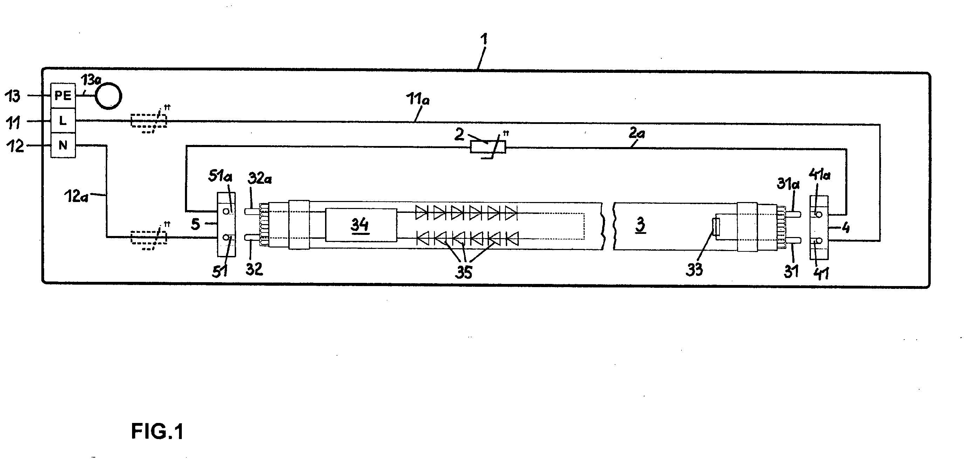

Die in FIG.1 dargestellte Schaltungsanordnung 1 ist mit Anschlussklemmen 11, 12 und 13 für einen Phasenleiter L, einen Neutralleiter N und einen Schutzleiter PE, mit einem strombegrenzenden elektrischen Bauteil 2 in Form eines PTC-Widerstandes (Positive Temperature Coefficient-Widerstand) und mit einer röhrenförmigen LED-Leuchte 3 ausgebildet. Der LED-Leuchte 3 sind auf einer Tragplatte, einem Gehäuse od.dgl. befindliche Befestigungssockel (G13-Sockel) 4 und 5 zugeordnet.

Die LED-Leuchte 3 ist an ihren beiden stirnseitigen Enden mit Kontaktstiften 31, 31a und 32, 32a ausgebildet. Innerhalb der LED-Leuchte 3 befinden sich eine Sicherung 33, ein AC/DC-Konverter 34 und eine Vielzahl von LED-Elementen 35. Die Befestigungssockel 4 und 5 sind mit den Kontaktstiften 31, 31a, 32, 32a zugeordneten Kontaktbuchsen 41, 41a, 51, 51a ausgebildet, in welche die Kontaktstifte 31, 31a, 32, 32a der LED-Leuchte 3 einsetzbar sind, wodurch diese in der Armatur befestigt wird und an das Versorgungsnetz anschließbar ist.

Von der Anschlussklemme 11 führt eine Leitung 11a zur Kontaktbuchse 41 des Befestigungssockels 4, von der Anschlussklemme 12 führt eine Leitung 12a zur Kontaktbuchse 51 des Befestigungssockels 5 und von der Anschlussklemme 13 führt eine Leitung 13a weg, mittels welcher der Träger, das Gehäuse u.dgl. für die Schaltungsanordnung 1 geerdet ist. Von der Kontaktbuchse 41a führt eine Leitung 2a zur Kontaktbuchse 51a. In dieser Leitung 2a befindet sich der strombegrenzende elektrische Bauteil 2 in Form eines PTC-Widerstandes (Positive Temperature Coefficient-Widerstand). Es ist dies ein Widerstand, dessen Widerstandswert mit ansteigender Temperatur stark ansteigt, wobei ab einer Nenntemperatur die Widerstandskennlinie einen sehr steilen Verlauf aufweist.

Im Betrieb ist die LED-Leuchte 3 in die Befestigungssockel 4 und 5 eingesetzt. Sobald die LED-Leuchte 3 an das Versorgungsnetz angeschaltet wird, wird sie über die Schaltungsanordnung 1 mit Wechselstrom mit einer Spannung von etwa 230 V bzw. mit einer Leistung von etwa 30 W gespeist. Die in der LED-Leuchte 3 befindliche Sicherung 33, welche als Schnellsicherung (F) ausgebildet ist, dient zur Begrenzung des der LED-Leuchte 3 zugeführten Stromes auf etwa 0,5 A. Der in der LED-Leuchte 3 befindliche Konverter 34 dient zur Umwandlung des der LED-Leuchte 3 zugeführten Wechselstroms in einen Gleichstrom mit 0,7 A zur Speisung der in Serie geschalteten LED-Elemente 35.

Im Fall, dass in die Befestigungssockel 4 und 5 anstelle einer LED-Leuchte 3 eine Leuchtstoffröhre eingesetzt und an das Versorgungsnetz angeschaltet wird, hätte dies zur Folge, dass der der Leuchtstoffröhre zugeführte Strom unmittelbar auf einen so hohen Wert ansteigt, dass die Leuchtstoffröhre explodiert.

Um diese Gefahr zu vermeiden ist in der Schaltungsanordnung 1 der strombegrenzende Bauteil 2 in Form eines PTC-Widerstandes vorgesehen, durch welchen ein starker Anstieg des der Leuchtstoffröhre zugeführten Stromes unmittelbar verhindert wird. In der Zeichnung ist der strombegrenzende Bauteil 2 in die Leitung 2a eingesetzt. Der strombegrenzende Bauteil 2 kann jedoch ebenso in die Leitung 11a oder in die Leitung 12a eingesetzt sein, wie dies strichliert dargestellt ist. Zudem kann in den an die LED-Leuchte 3 angeschlossenen Leitungen ergänzend zu einem ersten strombegrenzenden Bauteil 2 ein zweiter derartiger Bauteil eingesetzt sein für den Fall, dass der erste Bauteil 2 funktionsunfähig ist. Allerdings wird durch diese Redundanz ein Leistungsverlust verursacht.

Maßgeblich für eine derartige Schaltungsanordnung ist es, dass sich in den an die LED-Leuchte angeschlossenen Leitungen mindestens ein strombegrenzender Bauteil 2 in Form eines PTC-Widerstandes befindet.

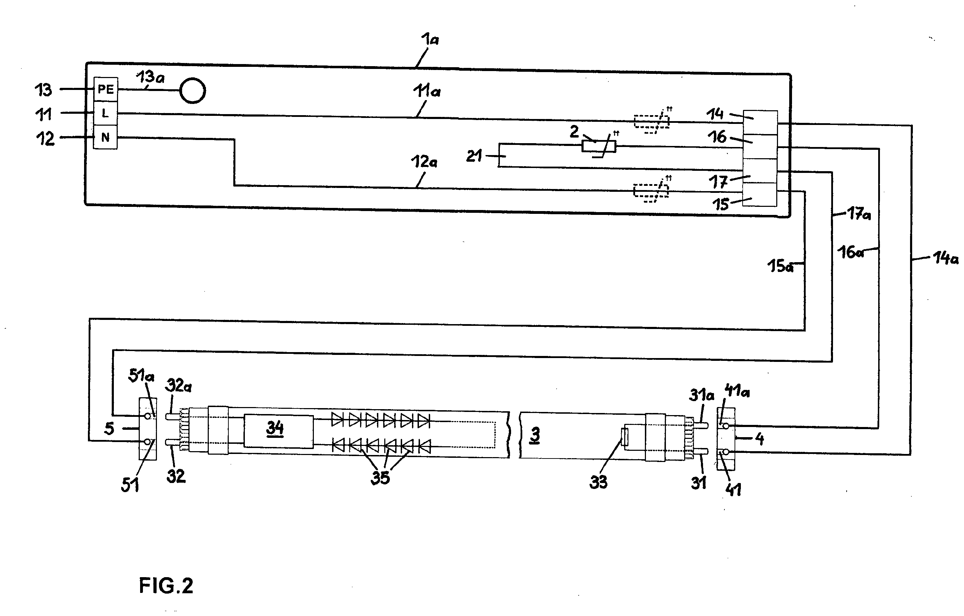

In FIG.2 ist eine weitere erfindungsgemäße Schaltungsanordnung 1a dargestellt, welche bei einer Armatur für eine LED-Leuchte 3 ein Zusatzgerät mit einem strombegrenzenden elektrischen Bauteil 2 bildet.

Bei herkömmlichen Armaturen für Leuchtstoffröhren bzw. für LED-Leuchten sind vier Anschlussklemmen vorgesehen, welche den vier Kontaktstiften der LED-Leuchten zugeordnet sind. Um eine erfindungsgemäße Schaltungsanordnung für LED-Leuchten so auszubilden, dass die übliche Montage beibehalten wird, ist diese auf einem Träger od.dgl. befindliche Schaltungsanordnung, welche bei der Montage einer LED-Leuchte ein Zusatzgerät darstellt, ebenfalls mit vier Anschlussklemmen ausgebildet, an welche die Speiseleitungen für die LED-Leuchte angeklemmt werden.

Die Schaltungsanordnung 1a ist mit Anschlussklemmen 11, 12 und 13 für einen Phasenleiter L, einen Neutralleiter N und einen Schutzleiter PE ausgebildet. Von der Anschlussklemme 11 führt eine Leitung 11a zu einer Anschlussklemme 14, von der Klemme 12 führt eine Leitung 12a zu einer Anschlussklemme 15 und von der Anschlussklemme 13 führt eine Leitung 13a weg, mittels welcher ein Träger bzw. ein Gehäuse für die Schaltungsanordnung 1a geerdet ist. Zudem sind zwei weitere Anschlussklemmen 16 und 17 vorgesehen, an welche eine Leitung 21 angeschlossen ist, in welcher sich der strombegrenzende elektrische Bauteil 2 in Form eines PTC-Widerstandes (Positive Temperature Coefficient-Widerstand) befindet.

Von der Befestigungsklemme 14 führt eine Leitung 14a zur Kontaktbuches 41 des Befestigungssockels 4, von der Anschlussklemme 15 führt eine Leitung 15a zur Kontaktbuchse 51 des Befestigungssockels 5, von der Anschlussklemme 16 führt eine Leitung 16a zur Kontaktbuches 41a des Befestigungssockels 4 und von der Anschlussklemme 17 führt eine Leitung 17a zur Kontaktbuchse 51a des Befestigungssockels 5.

Im Betrieb ist die LED-Leuchte 3 in die Befestigungssockel 4 und 5 eingesetzt. Sobald die LED-Leuchte 3 an das Versorgungsnetz angeschaltet wird, wird sie über die Schaltungsanordnung 1a mit Wechselstrom mit einer Spannung von etwa 230 V bzw. mit einer Leistung von etwa 30 W gespeist. Die in der LED-Leuchte 3 befindliche Sicherung 33, welche als Schnellsicherung (F) ausgebildet ist, dient zur Begrenzung des der LED-Leuchte 3 zugeführten Stromes auf etwa 0,5 A. Der in der LED-Leuchte 3 befindliche Konverter 34 dient zur Umwandlung des der LED-Leuchte 3 zugeführten Wechselstroms in einen Gleichstrom mit 0,7 A zur Speisung der in Serie geschalteten LED-Elemente 35.

Im Fall, dass in die Befestigungssockel 4 und 5 anstelle einer LED-Leuchte 3 eine Leuchtstoffröhre eingesetzt und an das Versorgungsnetz angeschaltet wird, hätte dies zur Folge, dass der der Leuchtstoffröhre zugeführte Strom unmittelbar auf einen so hohen Wert ansteigt, dass eine Explosion der Leuchtstoffröhre erfolgt.

Um diese Gefahr zu vermeiden ist in der Schaltungsanordnung 1a der strombegrenzende Bauteil 2 vorgesehen, durch welchen ein starker Anstieg des der Leuchtstoffröhre zugeführten Stromes unmittelbar verhindert wird. In der Zeichnung ist der strombegrenzende Bauteil 2 in die Leitung 21 eingesetzt. Dieser Bauteil 2 kann jedoch ebenso in die Leitung 11a oder in die Leitung 12a eingesetzt sein, wie dies strichliert dargestellt ist. Zudem kann in die Speiseleitung zur LED-Leuchte 3 ergänzend zu einem ersten strombegrenzenden Bauteil 2 ein zweiter derartiger Bauteil eingesetzt sein für den Fall, dass der erste Bauteil 2 funktionsunfähig ist. Allerdings wird durch diese Redundanz ein Leistungsverlust verursacht.

Maßgeblich für eine derartige Schaltungsanordnung ist es, dass sich in der Speiseleitung für eine LED-Leuchte mindestens ein strombegrenzender Bauteil 2 in Form eines PTC-Widerstandes befindet.

Wenngleich für LED-Leuchten keine Vorschaltgeräte erforderlich sind, können diese mittels der Schaltungsanordnung 1a, welche mit vier Klemmen ausgebildet ist, gemäß der üblichen Montageweise an das Versorgungsnetz angeschlossen werden. Für den Fall, dass in eine Armatur irrtümlich eine Leuchtstoffröhre eingesetzt wird, befindet sich in zumindest einer der zu den vier Anschlussklemmen führenden Leitungen ein strombegrenzender Bauteil in Form eines PTC-Widerstandes, durch welchen eine Explosion der Leuchtstoffröhre verhindert wird.

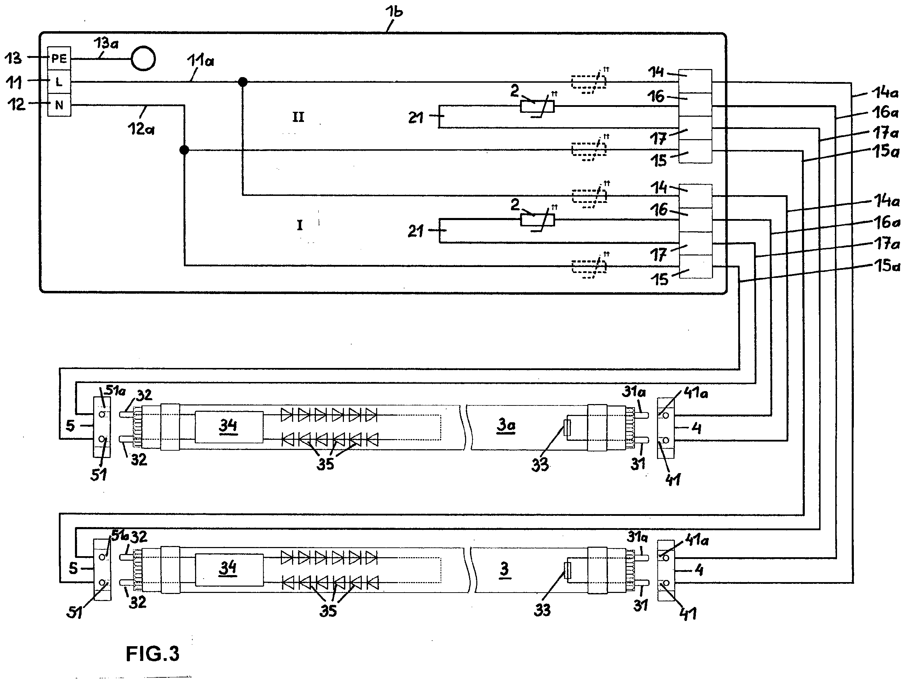

In FIG.3 ist eine erfindungsgemäße Schaltungsanordnung 1b dargestellt, an welche Armaturen für zwei LED-Leuchten 3 und 3a anschließbar sind. Die Schaltungsanordnung 1b ist gleichfalls mit Anschlussklemmen 11, 12 und 13 für einen Phasenleiter L, einen Neutralleiter N und einen Schutzleiter PE ausgebildet. Von der Klemme 11 führt eine Leitung 11a zu einer ersten Leitungsgruppe I mit einer Anschlussklemme 14, von der Klemme 12 führt eine Leitung 12a zu einer Klemme 15 und von der Klemme 13 führt eine Leitung 13a weg, mittels welcher ein Träger bzw. ein Gehäuse für die Schaltungsanordnung 1b geerdet ist. Zudem sind zwei weitere Klemmen 16 und 17 vorgesehen, an welche eine Leitung 21 angeschlossen ist, in welcher sich ein strombegrenzender elektrischer Bauteil 2 in Form eines PTC-Widerstandes (Positive Temperature Coefficient-Widerstand) befindet. An diese erste Leitungsgruppe I ist über eine erste Gruppe von Leitungen 14a, 15a, 16a und 17a eine erste LED-Leuchte 3 angeschlossen.

In der Schaltungsanordnung 1b ist weiters eine zur ersten Leitungsgruppe I parallele zweite Leitungsgruppe II vorgesehen, welche zu einer zweiten Gruppe von Anschlussklemmen 14, 15, 16 und 17 führt, an welche mittels einer zweiten Gruppe von Leitungen 14a, 15a, 16a und 17a eine zur ersten LED-Leuchte 3 parallel geschaltete zweite LED-Leuchte 3a angeschlossen ist. Betreffend die Befestigung, die Speisung, die Ausbildung und die Wirkungsweise der beiden LED-Leuchten 3 und 3a wird auf die Erläuterungen betreffend die LED-Leuchte 3 in FIG.2 Bezug genommen mit dem Hinweis, dass diese auch für die FIG.3 zutreffend sind. In beiden dieser Leitungsgruppen I und II befindet sich jeweils mindestens ein strombegrenzender Widerstand 2 in Form eines PTC-Widerstandes zum Schutz bei irrtümlich eingesetzten Leuchtstoffröhren. Die Schaltungsanordnung 1b dient als Zusatzgerät, an welches zwei LED-Leuchten 3 und 3a angeschlossen werden können.

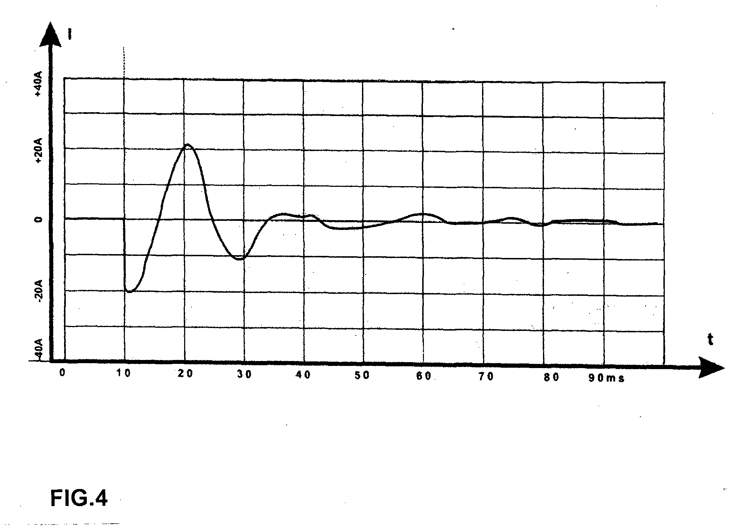

Die Wirkungsweise eines PTC-Widerstandes ist aus dem in FIG.4 dargestellten Diagramm erkennbar. Wie daraus ersichtlich ist, sinkt ein Spitzenstrom im Wert von 20 A bereits nach einer Netzperiode von etwa 20 ms auf einen so niedrigen Wert ab, dass die Explosion einer irrtümlich verwendeten Leuchtstoffröhre ausgeschlossen ist.

Sofern bei einer bestehenden Beleuchtungsanlage die Leuchtstoffröhren durch LED-Leuchten ersetzt werden sollen, können die bestehenden Vorschaltgeräte entfernt werden. Es muss jedoch an deren Stelle eine Schutzschaltung 1a bzw. 1b eingebaut werden, für den Fall, dass irrtümlich anstelle einer LED-Leuchte eine Leuchtstoffröhre eingesetzt wird. Aus dem gleichen Grund muss bei Montage einer Beleuchtungsanlage mit LED-Leuchten beim Anschluss an das Versorgungsnetz eine Schutzschaltung 1, 1a oder 1b vorgesehen werden.

## Patentansprüche

1. Schaltungsanordnung zum Betrieb mindestens einer LED-Leuchte (3, 3a), wobei die Schaltungsanordnung mindestens eine LED-Leuchte (3, 3a), Befestigungssockel (4, 5) mit Kontaktbuchsen (41, 41a, 51, 51a) für Kontaktstifte (31, 31a, 32, 32a) der LED-Leuchte(3, 3a), mit den Kontaktbuchsen (41, 51) verbundene Leitungen (2a, 11a, 12a, 14a, 15a, 16a, 17a, 21) zum Anschluss der LED-Leuchte (3, 3a) an ein elektrisches Versorgungsnetz und einen elektrotechnischen Bauteil (2) in einer der Leitungen (2a, 21) zur Begrenzung des Stromes aufweist, **dadurch gekennzeichnet, dass** der elektrotechnische Bauteil (2) ein PTC-Widerstand (2) ist.

2. Schaltungsanordnung nach Anspruch 1, **dadurch gekennzeichnet, dass** sie mit einem Träger ausgebildet ist, welcher mit ersten Klemmen (11, 12, 13) für den Anschluss an ein elektrisches Versorgungsnetz und mit zweiten Klemmen (14, 15, 16, 17) für den Anschluss der mindestens einen LED-Leuchte (3, 3a) ausgebildet ist, wobei die ersten und die zweiten Klemmen mittels weiterer elektrischer Leitungen (11a, 12a, 21) miteinander verbunden sind und sich in mindestens einer dieser weiteren Leitungen (11a, 12a, 21) der PTC-Widerstand (2) befindet.

3. Schaltungsanordnung nach Anspruch 1, **dadurch gekennzeichnet, dass** sie zwei LED-Leuchten (3, 3a) aufweist und mit einem Träger ausgebildet ist, welcher mit ersten Klemmen (11, 12, 13) für den Anschluss an ein elektrisches Versorgungsnetz und mit vier zweiten Klemmen (14, 15, 16, 17) für den Anschluss von jeweils einer der LED-Leuchten (3, 3a) ausgebildet ist, wobei ein Phasenleiter (11) und ein Neutralleiter (12) über weitere Leitungen (11a, 12a) mit zwei zweiten Klemmen (14, 15) verbindbar sind und die zwei weiteren zweiten Klemmen (16, 17) miteinander mittels einer zusätzlichen Leitung (21), in welcher sich der PTC-Widerstand (2) befindet, verbunden sind.

4. Schaltungsanordnung nach Anspruch 3, **dadurch gekennzeichnet, dass** sie mit zwei Gruppen (I, II) von zweiten Klemmen (14, 15, 16, 17) ausgebildet ist, an welche Speiseleitungen (14a, 15a, 16a, 17a) für die zwei LED-Leuchten (3, 3a) anklemmbar sind, wobei in vom Versorgungsnetz her führenden Anschlussleitungen (11a, 12a) für jede der beiden Gruppen (I, II) mindestens ein strombegrenzender Bauteil (2), nämlich jeweils ein PTC-Widerstand (2) vorgesehen ist.

## Claims

1. Circuit arrangement for the operation of at least one LED light (3, 3a), wherein the circuit arrangement comprises at least one LED light (3, 3a), fastening bases (4, 5) with contact sockets (41, 41a, 51, 51a) for contact pins (31, 31a, 32, 32a) of the LED light (3, 3a), lines (2a, 11a, 12a, 14a, 15a, 16a, 17a, 21) connected to the contact sockets (41, 51) for connecting the LED light (3, 3a) to an electrical supply network and an electrotechnical component (2) in one of the lines (2a, 21) for limiting the current, **characterized in that** the electrotechnical component (2) is a PTC resistor (2).

2. Circuit arrangement according to claim 1, **characterized in that** it is designed with a support which is designed with first terminals (11, 12, 13) for connection to an electrical supply network and second terminals (14, 15, 16, 17) for the connection of the at least one LED light (3, 3a), wherein the first and second terminals are connected to one another by means of further electrical lines (11a, 12a, 21), and the PTC resistor (2) is located in at least one of these further lines (11a, 12a, 21).

3. Circuit arrangement according to claim 1, **characterized in that** it has two LED lights (3, 3a) and is designed with a support which has first terminals (11, 12, 13) for the connection to an electrical supply network and four second terminals (14, 15, 16, 17) for the connection of each one of the LED lights (3, 3a), wherein a phase conductor (11) and a neutral conductor (12) can be connected with two second terminals (14, 15) via further lines (11a, 12a) and the two further second terminals (16, 17) are connected to one another by means of an additional line (21), in which the PTC resistor (2) is located.

4. Circuit arrangement according to claim 3, **characterized in that** it is designed with two groups (I, II) of second terminals (14, 15, 16, 17) to which feed lines (14a, 15a, 16a, 17a) for the two LED lights (3, 3a) can be clamped, wherein at least one current-limiting component (2), namely one PTC resistor (2) each, is provided in connection lines (11a, 12a) coming from the supply network for each of the two groups (I, II).

## Revendications

1. Agencement de circuit pour l'utilisation d'au moins une lampe à LED (3, 3a), l'agencement de circuit comportant au moins une lampe à LED (3, 3a), des socles de fixation (4, 5) comportant des douilles de contact (41,41a,51,51a) pour des broches de contact (31,31a,32,32a) de la lampe à LED (3, 3a), des câbles (2a, 11a, 12a, 14a, 15a, 16a, 17a, 21) connectés au douilles de contact (41,51) pour le raccordement des lampes à LED (3, 3a) à un réseau d'alimentation électrique et une pièce électrotechnique (2) dans un des câbles (2a, 21) pour la limitation du courant, **caractérisé en ce que** la pièce électrotechnique (2) est une résistance PTC (2).

2. Agencement de circuit selon la revendication 1, **caractérisé en ce qu'**il est réalisé avec un support qui est réalisé avec de premières bornes (11,12,13) pour le raccordement à un réseau d'alimentation électrique et avec de secondes bornes (14,15,16,17) pour le raccordement de l'au moins une lampe à LED (3, 3a), les premières et les secondes bornes étant connectées entre elles au moyen d'autres câbles électriques (11a, 12a, 21) et que la résistance PTC (2)se trouve dans au moins un de ces autres câbles (11a, 12a, 21) .

3. Agencement de circuit selon la revendication 1, **caractérisé en ce qu'**il présente deux lampes à LED (3, 3a) et est réalisé avec un support qui est réalisé avec de premières bornes (11,12,13) pour le raccordement à un réseau d'alimentation électrique et avec quatre secondes bornes (14,15,16,17) pour le raccordement de respectivement au moins une des lampes à LED (3, 3a), un conducteur de phase (11) et un conducteur neutre (12) étant connectables par d'autres câbles (11a, 12a) à deux autres bornes (14,15) et les deux autres secondes bornes (16,17) étant connectées entre elles au moyen d'un câble supplémentaire dans lequel se trouve la résistance PTC (2) .

4. Agencement de circuit selon la revendication 3, **caractérisé en ce qu'**il est réalisé avec deux groupes (I, II) de secondes bornes (14,15,16,17) auxquelles des câbles d'alimentation (14a, 15a, 16a, 17a) pour les deux lampes à LED (3, 3a) peuvent être fixés, étant prévue, dans des câbles de raccordement (11a, 12a) partant du réseau d'alimentation pour chacun des deux groupes (I, II), au moins une pièce de limitation de courant (2), à savoir respectivement une résistance PTC (2).
